# EUROPEAN PATENT APPLICATION

(11) **EP 2 634 472 A1**
(43) Date of publication of application: **04.09.2013**
(21) Application number: 11835599.9
(22) Date of filing: 18.10.2011
(51) Int. Cl.: F21S 2/00, F21V 23/04, F21V 29/00, F21V 3/02, F21V 3/04

(54) **MICROWAVE-SENSING LED LAMP TUBE**

(30) Priority: 29.10.2010 CN 201020585212 U
(71) Applicant: Chen, Ming Yun, Guangdong 523000 (CN)
(72) Inventor: Chen, Ming Yun, Guangdong 523000 (CN)
(74) Representative: Rees, Simon John Lewis
(86) International application number: PCT/CN2011/080887
(87) International publication number: WO 2012/055326

(57) **Abstract**

The invention relates to illumination equipment and more particularly relates to microwave sensor LED light tube. The microwave sensor LED light tube includes a light cover, light heads, LED light and light tube body. The light head are disposed at two ends of the light tube body, the light cover is disposed on the light tube body, the light cover covers the LED light. The microwave sensor LED light tube also includes a microwave sensor and the light cover covers the microwave sensor. The invention is not only convenient for use and is also suitable for environment that needs automatic control.

## Description

### CROSS REFERENCE TO RELATED APPLICATIONS

This present application claims the benefit of PCT application No. PCT/CN2011/080887 filed October 18, 2011 which claims the priority of China application No. 201020585212.8 filed October 29, 2010, the entire disclosures of which are hereby incorporate by reference in their entireties.

### FIELD

The present invention relates to light equipment and more particularly relates to light emitting diode (LED) light tube with microwave sensor.

### BACKGROUND

Lights are widely used for illumination in city roads, sidewalk, garages, offices, public place and bring people convenient life. Common illumination equipment include tungsten filament bulb, fluorescent lamp, LED lamps, etc. LED lamps have advantages of high efficiency, safety, energy conservation, environment protection, long lifetime, fast response and become mostly widely used illumination lamp.

LED light tubes are a common LED lamp. Usually, a switch is used for controlling on and off of a LED bulb. It is not convenient enough and not suitable for environment that needs automatic control.

### SUMMARY OF THE INVENTION

One of objectives of the present invention is to cure the deficiency of conventional art by providing a microwave sensor LED light tube, which is convenient to be used and suitable for environment that needs automatic control.

To achieve the aforementioned objective, an embodiment of the present invention is provided as follows. A microwave sensor LED light tube includes a light cover, light heads, a LED light and a light tube body. The light heads are disposed as two ends of the light tube body. The light cover is disposed on the light tube body and the light cover covers the LED light. In addition, the microwave sensor LED light tube includes a microwave sensor, and the light cover covers the microwave sensor.

The light tube body may be aluminum-alloy heat dissipation body.

The exterior sidewall of the aluminum-alloy heat dissipation body may be disposed with cooling fins.

The light cover may be a semi circular tube body.

The light cover may be a PVC tube cover.

Technical effect of the present invention are explained as follows. The microwave sensor LED light tube includes a light cover, light heads, a LED light and a light tube body. The light heads are disposed at two ends of the light tube body. The light cover is disposed on the light tube body and the light cover covers the LED light. The microwave sensor LED light tube also includes a microwave sensor and the light cover covers the microwave sensor. When the microwave sensor LED light tube is used, the microwave sensor senses human movement. Once human movement is detected, the LED light is turned on. Otherwise, when human movement is not detected, the LED light is controlled to turn off for achieving the objective of automatic control. This is convenient and also suitable for environment that needs automatic control.

### BRIEF DESCRIPTION OF DRAWINGS

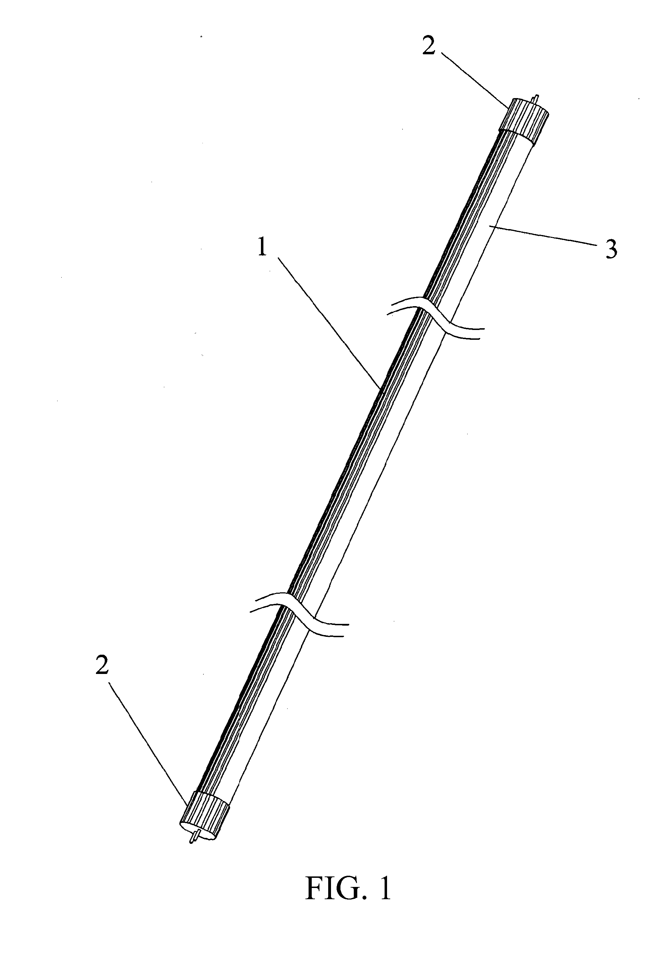

Fig 1. is a diagram illustrating an structure embodiment according to the present invention.

### DETAILED DESCRIPTION OF THE EMBODIMENTS

The present invention is explained in more details with an accompanied drawing.

As shown in FIG. 1, a microwave sensor LED light tube has a light cover 3, light heads 2, a LED light and light tube body 1. The light heads 2 are disposed at two ends of the light tube body 1. The light cover 3 is disposed on the light tube body 1. The light cover 3 covers the LED light. The microwave sensor LED light tube also has a microwave sensor and the light cover covers the microwave sensor. In a preferred embodiment, the light tube body 1 is an aluminum-alloy heat dissipation body. An exterior sidewall of the aluminum-alloy heat dissipation body is disposed with cooling fins. The aluminum-alloy heat dissipation body has good heat conducting and heat dissipation function. The cooling fins can increase contact area of the aluminum-alloy heat dissipation body and exterior air for more effectively increase heat dissipation of the aluminum-alloy heat dissipation body. In a preferred embodiment, the light cover 3 is a semi circular tube body and the light cover 3 is a polyvinylchloride (PVC) tube cover.

The operation of the aforementioned microwave sensor LED light tube utilizes the advantages of microwave sensor that has fast response and high sensibility. When the microwave sensor LED light is used, the microwave sensor light senses human movement. When human movement is detected, the LED light is turned on. When no human movement is detected, the LED light is turned off. With such design, automatic control is achieved. If additional switch is used, there is more flexibility. Such design is not only convenient for use and also suitable for environment that needs automatic control.

While the present invention has been related in terms of the foregoing embodiments, those skilled in the art will recognize that the invention is not limited to the embodiments described. The present invention can be practiced with modification and alteration within the spirit and scope of the appended claims. Thus, the description is to be regarded as illustrative instead of restrictive on the present invention.

## Claims

1. A microwave sensor light emitting diode (LED) light tube, comprising:
a light cover;
a plurality of light heads;
a LED light;
a light tube body, wherein the light heads are disposed at two ends of the light body tube, the light cover covers the LED light; and
a microwave sensor, the light cover covers the microwave sensor.

2. The microwave sensor LED light tube of claim 1, wherein the light tube body is an aluminum-alloy heat dissipation body.

3. The microwave sensor LED light tube of claim 2, wherein an exterior sidewall of the aluminum-alloy heat dissipation body is disposed with cooling fins.

4. The microwave sensor LED light tube of claim 3, wherein the light cover is a semi-circular tube body.

5. The microwave sensor LED light tube of claim 4, wherein the light cover is a polyvinylchloride (PVC) tube cover.
